# EUROPÄISCHE PATENTSCHRIFT

(11) **EP 1 717 922 B1**
(45) Veröffentlichungstag und Bekanntmachung des Hinweises auf die Patenterteilung: **06.06.2012**
(21) Anmeldenummer: 06111512.7
(22) Anmeldetag: 21.03.2006
(51) Int. Cl.: H02G 3/08

(54) **Gehäuse mit einer Durchführung für einen elektrischen Leiter**
Housing with electrical wire feedthrough
Boîtier avec entrée de cable électrique

(30) Priorität: 30.04.2005 DE 202005006965 U
(43) Veröffentlichungstag der Anmeldung: 02.11.2006
(73) Patentinhaber: Weidmüller Interface GmbH & Co. KG, 32758 Detmold (DE)
(72) Erfinder: Schmidtpott, Heike, 32105, Bad Salzuflen (DE); Höing, Michael, 32657, Lemgo (DE)
(74) Vertreter: Dantz, Jan Henning

(56) Entgegenhaltungen:
- DE-A1- 10 125 625
- FR-A1- 2 723 162

## Beschreibung

Die vorliegende Erfindung betrifft ein Gehäuse mit einer Durchführung für einen elektrischen Leiter gemäß dem Oberbegriff des Anspruchs 1.

Zur Einführung bzw. Durchführung eines elektrischen Leiters ist in dem Gehäuse, das zweiteilig ausgebildet ist und aus einem Unter- und einem Oberteil besteht, mindestens eine Durchführung vorgesehen, in die eine Dichtbuchse mit einer umfänglichen Dichtlippe eingelegt ist, die in Funktionsstellung dichtend an dem Leiter anliegt. Ein solches Gehäuse ist aus der DE 101 25 625 A1 bekannt.

Dabei wird die Durchführung durch zwei halbschalenförmige Ausnehmungen gebildet, von denen jeweils eine im Ober- und Unterteil vorgesehen ist, die im zusammengebauten Zustand gemeinsam die Durchgangsöffnung für den Leiter bilden.

Die bekannten Gehäuse sind so ausgebildet, dass der oder die Dichtlippen lediglich eingelegte Leiter mit bestimmten Durchmessern abdichten.

Für den Fall, dass Rundleiter mit einem davon abweichenden Durchmesser in das Gehäuse geführt werden sollen, muss bislang ein Gehäuse eingesetzt werden, dessen Durchführung daran angepasst ist. Naturgemäß ist dies mit einem erheblichen Fertigungsaufwand verbunden, da unterschiedliche Gehäuse bereit gehalten werden müssen.

Der vorliegenden Erfindung liegt die Aufgabe zugrunde, ein Gehäuse der gattungsgemäßen Art so weiter zu entwickeln, dass seine Verwendungsfähigkeit verbessert wird.

Diese Aufgabe wird durch ein Gehäuse gelöst, das die Merkmale des Anspruchs 1 aufweist.

Durch die Erfindung ist gewährleistet, dass problemlos unterschiedliche Leiterdurchmesser ausreichend in der Durchführung der Gehäusewand abgedichtet werden.

Während die angespritzten Dichtwülste der Durchführung des Gehäuses lediglich Leiter mit beispielsweise einem Durchmesser von 4, 6 und 6,5 mm abdichten, können durch den Einsatz der Dichtbuchse auch Leiter mit beispielsweise einem Durchmesser von 2 bis 4 mm abgedichtet werden, vorzugsweise 2, 2,4 und 2,9 mm, wobei der Durchmesser 4 mm sowohl durch den Dichtwulst der Gehäusedurchführung wie auch durch eine entsprechende Dichtlippe der Durchgangsöffnung der Dichtbuchse abgedichtet wird.

Dabei ist die Dichtbuchse der Länge nach geschlitzt, so dass beim Durchführen eines dickeren Leiters die Dichtbuchse in gewissem Umfang aufgespreizt wird und die entsprechende Dichtlippe unter Wirkung der Rückstellkräfte der Dichtbuchse am Leiter anliegt. Der im Durchmesser kleinste einführbare Leiter liegt unter geringerer Aufspreizung der Dichtbuchse an der Dichtlippe mit dem kleineren lichten Durchmesser an, wobei die jeweilige Dichtlippe durch das Aufsetzen des Oberteiles auf das Unterteil des Gehäuses und entsprechende Verformung der Dichtbuchse fest an den eingelegten Leiter angepresst wird. Bei Durchführung eines Leiters mit größerem Durchmesser verformt sich die Dichtlippe mit kleinstem lichten Abmaß soweit, dass die diesem Leiter zugeordnete Dichtlippe in vollem Umfang zur Anlage kommt.

Nach einer vorteilhaften Weiterbildung der Erfindung ist vorgesehen, dass die Dichtbuchse bei Nichtgebrauch durch einen in die axiale Durchgangsöffnung eingesteckten Stopfen verschlossen ist. Sowohl in dem Fall, dass die Dichtbuchse in der Durchführung des Gehäuses platziert, jedoch kein Leiter durchgeführt ist, wie auch in dem Fall, dass die Dichtbuchse nicht zum Einsatz kommt und innerhalb des Gehäuses positioniert ist.

Dabei kann der Stopfen an einem Ende federnde Rastzungen aufweisen, die in eine Ausnehmung des Gehäusebodens form- und/oder reibschlüssig eingreifen, so dass die Einheit Stopfen/Dichtbuchse sicher gehalten wird. Dies ist insbesondere als Transportsicherung von Vorteil, wenn das Gehäuse einschließlich der Baueinheit Stopfen/Dichtbuchse zur Auslieferung kommt.

Des weiteren kann der Stopfen mit Dichtbuchse durch eine Verliersicherung verbunden sein, beispielsweise in Form eines Ösenbandes, das an einem Ende fest mit der Dichtbuchse verbunden ist und am anderen Ende mit einer Öse auf den Stopfen aufgesteckt ist und dort, beispielsweise im Bereich der genannten Rastzungen formschlüssig gehalten wird.

Falls der Stopfen sozusagen als Blindstopfen in die in der Wandung des Gehäuses eingelegte Dichtbuchse eingeschoben werden soll, kann der Stopfen und die Dichtbuchse als Einheit aus der Ausnehmung entnommen werden ohne das Ösenband vom Stopfen abziehen zu müssen.

Um eine Beschädigung der Dichtlippen der Dichtbuchse zu gewährleisten, weist der Stopfen umfänglich an die Dichtlippen angepasste Nuten auf, die die Dichtlippen insoweit abdecken und gleichzeitig eine Verschiebesicherung in der Dichtbuchse bilden.

Weiter ist die Dichtbuchse außenseitig mit mindestens einer umlaufenden Nut versehen, in die in die Gehäusewandung eingesetzter Stellung die angespritzte Dichtwulst der Durchführung eingefügt ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figuren 1 bis 4: das erfindungsgemäße Gehäuse in einem Teilausschnitt, jeweils in einer anderen Funktionsstellung
- Figuren 5 und 6: Einzelheiten des erfindungsgemäßen Gehäuses jeweils in einer perspektivischen Ansicht
- Figur 7: die Einzelheit nach Figur 6 in einer Draufsicht
- Figur 8: die Einzelheit in einer perspektivischen Ansicht
- Figur 9: einen Schnitt durch die Einzelheit gemäß der Linie IX - IX in Figur 7

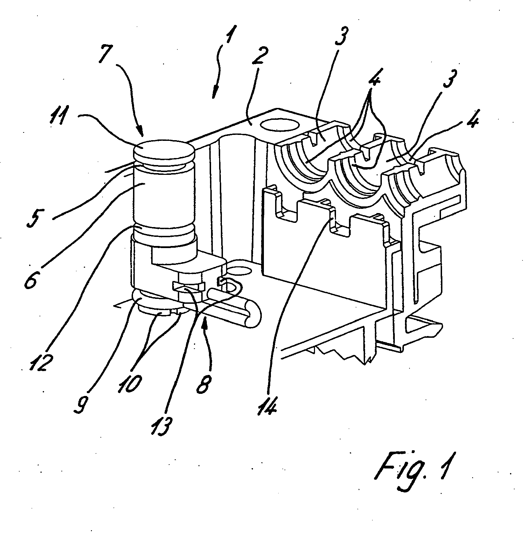

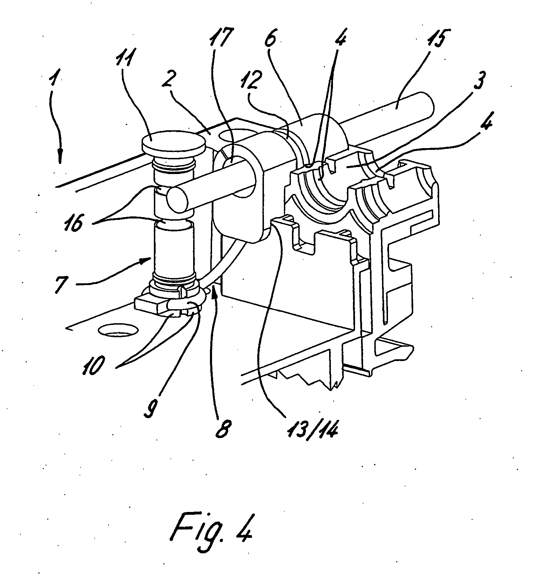

In den Figuren 1 bis 4 ist das Unterteil 2 eines zweiteiligen Gehäuses 1 dargestellt, das mehrere Durchführungen 3 aufweist, die nebeneinander liegend in einer Wandung des Unterteiles 2 angeordnet sind und jeweils halbschalenförmig ausgebildet sind. Komplettiert werden die Durchführungen 3 durch das Aufsetzen des nicht dargestellten Oberteiles, das die anderen Hälften der als Halbschalen vorliegenden Durchführungen 3 bilden, so dass sich insgesamt in montierter Stellung des Ober- und Unterteiles 2 Durchführungen 3 für Leiter mit runden Querschnitten ergeben. Ein solcher Leiter ist in der Figur 4 mit dem Bezugszeichen 15 versehen.

Jede Durchführung 3 weist zwei angespritzte Dichtwülste 4 auf, deren lichte Durchmesser unterschiedlich sind, entsprechend dem Durchmesser eines durchgeführten Leiters, an dem sie dann dichtend anliegen.

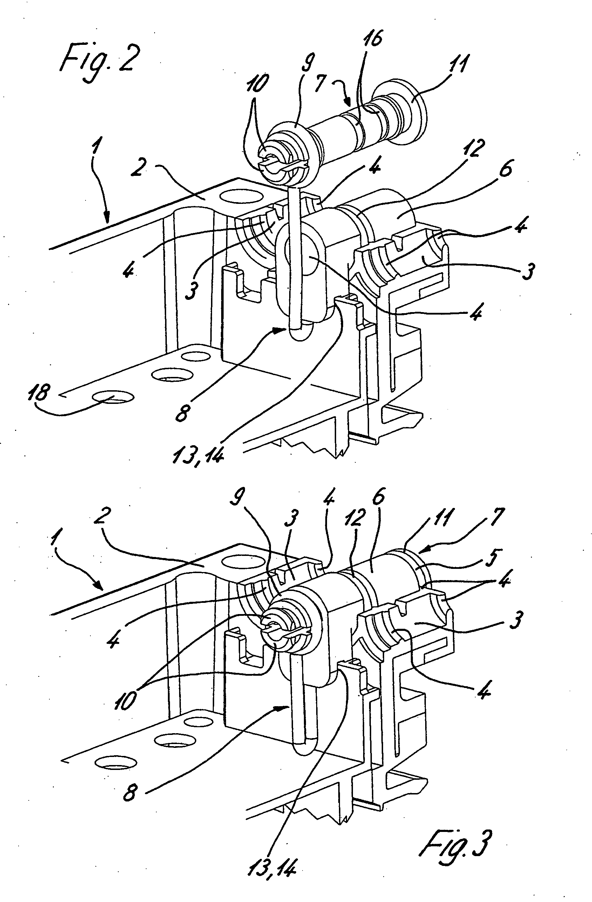

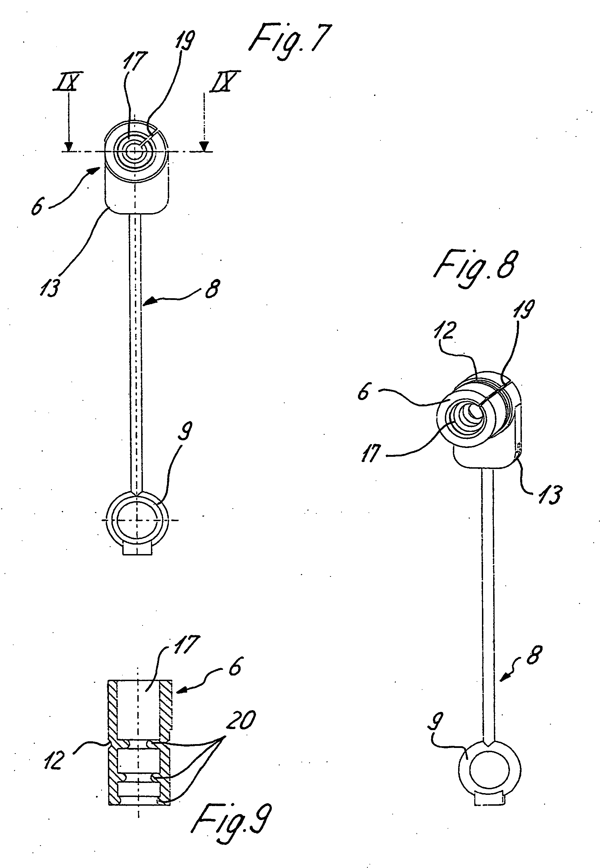

Das Gehäuse 1 weist weiter eine aus einem Kunststoff gebildete Dichtbuchse 6 auf, die, wie die Figuren 2 bis 4 sehr deutlich zeigen, in Funktionsstellung in einer der Durchführungen 3 einliegt und die eine axiale Durchgangsöffnung 17 aufweist mit mehreren umfänglichen Dichtlippen 20 (Figur 9). Die lichten Durchmesser im Durchgangsbereich dieser Dichtlippen 20 sind ebenfalls unterschiedlich groß und entsprechen den Durchmessern von verschiedenen Leitern 15, die von außen in das Gehäuse 1 geführt werden. Im Funktionsfall liegen die Dichtlippen 20 an dem entsprechenden Kabel dichtend an.

In der Figur 1 ist die Dichtbuchse 6 in einer Nichtgebrauchsstellung gezeigt, in der sie am Unterteil 2 außerhalb der Durchführöffnung 3 fixiert ist. Hierzu ist in die Durchgangsöffnung 17 ein Stopfen 7 eingesteckt, der an einem Ende einen Kopf 11 aufweist, der die Stirnseite der Dichtbuchse 6 überdeckt, und am anderen Ende zwei federnde Rastzungen 10, die in eine Ausnehmung 18 (Figur 2) des Bodens des Unterteiles 2 eingesteckt und dort gehalten sind.

Der Stopfen 7, dessen Rastzungen 10 aus der Dichtbuchse 6 herausragen, ist über ein Ösenband 8 verliergesichert mit der Dichtbuchse 6 verbunden, wobei das Ösenband 8 eine Öse 9 aufweist, die in einer umlaufenden Ringnut 21 an den Rastzungen 10 arretiert einliegt.

Der Stopfen 7 weist weiterhin entsprechend der Anzahl der Dichtlippen 20 umlaufende Nuten 16 auf, in denen, wenn der Stopfen 7 in die Dichtbuchse 6 eingesteckt ist, die Dichtlippen 20 geschützt einliegen.

In der Figur 2 ist eine Position dargestellt, bevor der Stopfen 7 in die Dichtbuchse 6 eingesteckt ist, während in der Figur 3 der Stopfen 7 die Dichtbuchse 6 als Blindstopfen verschließt. In dieser Figur ist auch erkennbar, dass zwischen dem Kopf 11 und der Stirnseite der Dichtbuchse 6 ein Spalt 5 gebildet ist, der einen äußeren Dichtwulst der Durchführung 3 aufnimmt, während eine umlaufende Nut 12 der Dichtbuchse 6 einen inneren Dichtwulst 4 überdeckt.

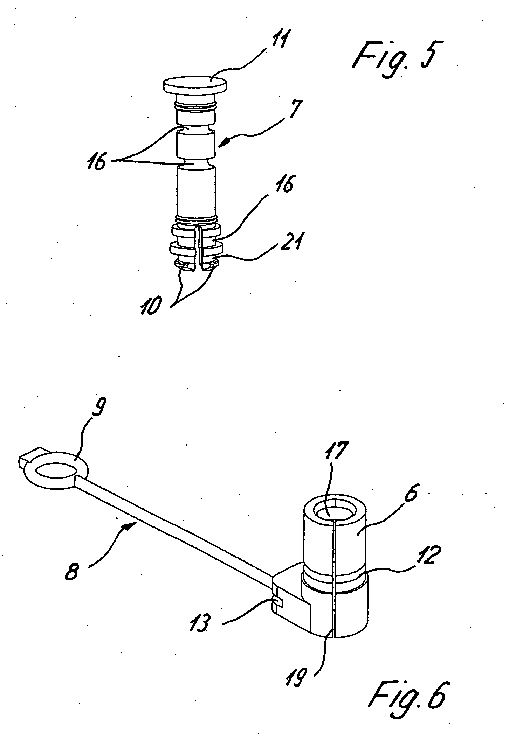

Während in den Figuren 2 und 3 die Dichtbuchse 6 durch den Stopfen 7 verschlossen ist, also kein Leiter 15 durchgeführt ist, ist in der Figur 4 der Leiter 15 in die Durchgangsöffnung 17 eingesteckt. Des weiteren ist zu erkennen, dass die Dichtbuchse 6 Aussparungen 13 aufweist (Figur 6), in die Stege 14 der Wandung des Unterteiles 2 eingreifen, so dass eine exakte Arretierung der Dichtbuchse 6 gewährleistet ist.

Der Stopfen 7 ist bei Nichtgebrauch entsprechend der Darstellung in Figur 4 über das Ösenband 8 verliergesichert mit der Dichtbuchse 6 verbunden und in der Ausnehmung 18 des Unterteiles 2 arretiert.

Zur einfachen Durchführung eines Leiters mit angeschlossenem Leiter ist die Dichtbuchse 6 mit einem Längsschlitz 19 versehen, der von außen bis zur Durchgangsöffnung 17 und über die gesamte Länge der Dichtbuchse 6 geführt ist, so dass je nach Durchmesser des eingeführten Leiters 15 sich die gebildeten Schenkel der Dichtbuchse 6 mehr oder weniger weit aufspreizten und die zugeordnete Dichtlippe an dem Leiter 15 dichtend zur Anlage kommt. Durch Verspannen des Oberteiles mit dem Unterteil 2 wird die üblicherweise aus Kunststoff bestehende Dichthülse 6 so zusammengepresst, dass die entsprechende Dichtlippe 20 dicht an dem Leiter 15 anliegt.

### Bezugszeichenliste

- 1: Gehäuse
- 2: Unterteil
- 3: Durchführung
- 4: Dichtwulst
- 5: Spalt
- 6: Dichtbuchse
- 7: Stopfen
- 8: Ösenband
- 9: Öse
- 10: Rastzunge
- 11: Kopf
- 12: Nut
- 13: Aussparung
- 14: Steg
- 15: Leiter
- 16: Nut
- 17: Durchgangsöffnung
- 18: Ausnehmung
- 19: Längsschlitz
- 20: Dichtlippe
- 21: Ringnut

## Patentansprüche

1. Ein Ober- und ein Unterteil (2) aufweisendes Gehäuse (1) mit einer Durchführung (3) für einen elektrischen Leiter (15), wobei eine Dichtbuchse (6) vorgesehen ist, die in die Durchführung (3) einlegbar ist und die eine axiale Durchgangsöffnung (17) mit mindestens einer umfänglichen Dichtlippe (20) aufweist, **dadurch gekennzeichnet, dass** die Durchführung mindestens einen Dichtwulst (4) aufweist.

2. Gehäuse nach Anspruch 1, **dadurch gekennzeichnet, dass** die Dichtbuchse (6) mehrere Dichtlippen (20) mit jeweils einem anderen lichten Durchmesser aufweist.

3. Gehäuse nach Anspruch 1 oder 2, **dadurch gekennzeichnet, dass** die Dichtbuchse (6) zumindest eine umfängliche Nut aufweist, die bei in die Durchführöffnung (3) eingesetzter Stellung einen zugeordneten Dichtwulst (4) umgreift.

4. Gehäuse nach einem der vorhergehenden Ansprüche, **dadurch gekennzeichnet, dass** die Dichtbuchse (6) einen Längsschlitz (19) aufweist, der sich über die gesamte Länge und von außen bis in die Durchgangsöffnung (17) erstreckt.

5. Gehäuse nach einem der vorhergehenden Ansprüche, **dadurch gekennzeichnet, dass** die Dichtbuchse (6) mit Aussparungen (13) versehen ist, in denen Stege (14) des Gehäuses (1) einliegen.

6. Gehäuse nach einem der vorhergehenden Ansprüche, **dadurch gekennzeichnet, dass** ein Stopfen (7) vorgesehen ist, der bei Nichtgebrauch der Dichtbuchse (6) in diese eingesteckt ist.

7. Gehäuse nach einem der vorhergehenden Ansprüche, **dadurch gekennzeichnet, dass** der Stopfen (7) umfängliche Nuten (16) aufweist, in denen bei in die Dichtbuchse (6) eingesteckter Stellung die Dichtlippen (20) einliegen.

8. Gehäuse nach einem der vorhergehenden Ansprüche, **dadurch gekennzeichnet, dass** der Stopfen (7) an einem Ende einen Kopf (11) aufweist, der die zugeordnete Stirnseite der Dichtbuchse (6) überdeckt.

9. Gehäuse nach einem der vorhergehenden Ansprüche, **dadurch gekennzeichnet, dass** der Stopfen (7) an seinem dem Kopf (11) gegenüberliegenden Endbereich federnde Rastzungen aufweist, die in eine Ausnehmung (18) des Gehäuses (1) form- und/oder reibschlüssig einsteckbar sind.

10. Gehäuse nach einem der vorhergehenden Ansprüche, **dadurch gekennzeichnet, dass** der Stopfen (7) verliergesichert mit der Dichtbuchse (6) verbunden ist.

11. Gehäuse nach einem der vorhergehenden Ansprüche, **dadurch gekennzeichnet, dass** zur Verliersicherung des Stopfens (7) ein Ösenband (8) vorgesehen ist, das einerseits mit der Dichtbuchse (6) und andererseits mit dem Stopfen (7) verbunden ist.

12. Gehäuse nach einem der vorhergehenden Ansprüche, **dadurch gekennzeichnet, dass** das Ösenband (8) an einem Ende eine Öse (9) aufweist, die formschlüssig mit dem Stopfen (7) verbunden ist.

13. Gehäuse nach einem der vorhergehenden Ansprüche, **dadurch gekennzeichnet, dass** die Öse (9) im Bereich der federnden Rastzungen (10) lösbar an dem Stopfen (7) angeschlossen ist.

14. Gehäuse nach einem der vorhergehenden Ansprüche, **dadurch gekennzeichnet, dass** die Dichtbuchse (6) aus einem elastischen Material, vorzugsweise einem Kunststoff besteht.

15. Gehäuse nach einem der vorhergehenden Ansprüche, **dadurch gekennzeichnet, dass** die Dichtlippen (20) elastisch verformbar sind.

16. Gehäuse nach einem der vorhergehenden Ansprüche, **dadurch gekennzeichnet, dass** die Dichtbuchse (6) durch Verspannen des Oberteiles mit dem Unterteil (2) derart verformbar ist, dass die jeweils zugeordnete Dichtlippe (20) an dem entsprechenden eingeführten Leiter (15) dichtend anliegt.

## Claims

1. A housing (1) having an upper part and a lower part (2) with a lead-through (3) for an electric conductor (15), with a sealing bush (6) being provided which can be placed in the lead-through (3) and which has an axial through opening (17) with at least one peripheral sealing lip (20), **characterised in that** the lead-through has at least one sealing bead (4).

2. A housing according to Claim 1, **characterised in that** the sealing bush (6) has a plurality of sealing lips (20) with a different internal diameter in each case.

3. A housing according to Claim 1 or 2, **characterised in that** the sealing bush (6) has at least one peripheral groove which, in the position inserted into the lead-through opening (3), engages around an associated sealing bead (4).

4. A housing according to one of the preceding claims, **characterised in that** the sealing bush (6) has a longitudinal slit (19) which extends over the entire length and from the outside into the through opening (17).

5. A housing according to one of the preceding claims, **characterised in that** the sealing bush (6) is provided with cutouts (13) in which lands (14) of the housing (1) lie.

6. A housing according to one of the preceding claims, **characterised in that** a plug (7) is provided which is inserted into the sealing bush (6) when the latter is not being used.

7. A housing according to one of the preceding claims, **characterised in that** the plug (7) has peripheral grooves (16) in which the sealing lips (20) lie in the position inserted into the sealing bush (6).

8. A housing according to one of the preceding claims, **characterised in that** the plug (7) has at one end a head (11) which covers the associated end face of the sealing bush (6).

9. A housing according to one of the preceding claims, **characterised in that** the plug (7) has on its end region located opposite the head (11) resilient latch tongues which can be inserted into a cutout (18) in the housing (1) in positive-locking and/or friction-locking manner.

10. A housing according to one of the preceding claims, **characterised in that** the plug (7) is connected to the sealing bush (6) in loss-preventing manner.

11. A housing according to one of the preceding claims, **characterised in that** an eyelet band (8) is provided for preventing loss of the plug (7), which band is connected on one hand to the sealing bush (6) and on the other hand to the plug (7).

12. A housing according to one of the preceding claims, **characterised in that** the eyelet band (8) has at one end an eyelet (9) which is connected to the plug (7) in positive-locking manner.

13. A housing according to one of the preceding claims, **characterised in that** the eyelet (9) is connected detachably to the plug (7) in the region of the resilient latch tongues (10).

14. A housing according to one of the preceding claims, **characterised in that** the sealing bush (6) consists of an elastic material, preferably a plastics material.

15. A housing according to one of the preceding claims, **characterised in that** the sealing lips (20) are elastically deformable.

16. A housing according to one of the preceding claims, **characterised in that** the sealing bush (6) is deformable by clamping the upper part with the lower part (2) such that the associated sealing lip (20) in each case lies in sealing manner on the correspondingly introduced conductor (15).

## Revendications

1. Boîtier (1) présentant une partie supérieure et une partie inférieure (2) avec une traversée (3) pour un conducteur électrique (15), dans lequel il est prévu une douille d'étanchéité (6) qui peut être introduite dans la traversée (3) et qui présente un orifice de passage axial (17) possédant au moins une lèvre d'étanchéité périphérique (20), **caractérisé en ce que** la traversée présente au moins un bourrelet d'étanchéité (4).

2. Boîtier selon la revendication 1, **caractérisé en ce que** la douille d'étanchéité (6) présente plusieurs lèvres d'étanchéité (20) ayant chacune un autre diamètre intérieur.

3. Boîtier selon la revendication 1 ou la revendication 2, **caractérisé en ce que** la douille d'étanchéité (6) présente au moins une rainure périphérique qui, dans la position insérée dans la traversée (3), enveloppe un bourrelet d'étanchéité (4) associé.

4. Boîtier selon l'une quelconque des revendications précédentes, **caractérisé en ce que** la douille d'étanchéité (6) présente une fente longitudinale (19) qui s'étend sur toute la longueur et de l'extérieur jusqu'à l'intérieur de l'orifice de passage (17).

5. Boîtier selon l'une quelconque des revendications précédentes, **caractérisé en ce que** la douille d'étanchéité (6) est dotée d'échancrures (13) dans lesquels des nervures (14) du boîtier (1) sont engagées.

6. Boîtier selon l'une quelconque des revendications précédentes, **caractérisé en ce qu'**il est prévu un bouchon (7) qui est introduit dans la douille d'étanchéité (6) lorsque cette dernière n'est pas utilisée.

7. Boîtier selon l'une quelconque des revendications précédentes, **caractérisé en ce que** le bouchon (7) présente des rainures (16) périphériques dans lesquelles les lèvres d'étanchéité (20) sont engagées dans la position introduite dans la douille d'étanchéité (6).

8. Boîtier selon l'une quelconque des revendications précédentes, **caractérisé en ce que** le bouchon (7) présente à une extrémité une tête (11) qui recouvre la face frontale correspondante de la douille d'étanchéité (6).

9. Boîtier selon l'une quelconque des revendications précédentes, **caractérisées en ce que** le bouchon (7) présente dans sa zone opposée à la tête (11) des languettes d'encliquetage élastiques qui peuvent s'engager mécaniquement et/ou par frottement dans un évidement (18) du boîtier (1).

10. Boîtier selon l'une quelconque des revendications précédentes, **caractérisées en ce que** le bouchon (7) est relié de manière assurée contre la perte à la douille d'étanchéité (6).

11. Boîtier selon l'une quelconque des revendications précédentes, **caractérisées en ce que**, pour assurer le bouchon (7) contre la perte, il est prévu une attache à oeillet (8) qui est reliée d'une part à la douille d'étanchéité (6) et d'autre part au bouchon (7).

12. Boîtier selon l'une quelconque des revendications précédentes, **caractérisé en ce que** l'attache à oeillet (8) présente à une extrémité un oeillet (9) qui est relié mécaniquement au bouchon (7).

13. Boîtier selon l'une quelconque des revendications précédentes, **caractérisé en ce que** l'oeillet (9) est rattaché au bouchon (7) de manière détachable dans la zone des languettes d'encliquetage élastiques (10).

14. Boîtier selon l'une quelconque des revendications précédentes, **caractérisé en ce que** la douille d'étanchéité (6) est constituée d'un matériau élastique, de préférence d'une matière plastique.

15. Boîtier selon l'une quelconque des revendications précédentes, **caractérisé en ce que** les lèvres d'étanchéité (20) sont déformables élastiquement.

16. Boîtier selon l'une quelconque des revendications précédentes, **caractérisé en ce que** la douille d'étanchéité (6) peut être déformée par le serrage de la partie supérieure avec la partie inférieure (2) de telle façon que la lèvre d'étanchéité (20) respectivement associée est en contact étanche avec le conducteur (15) correspondant inséré.
